# EUROPEAN PATENT SPECIFICATION

(11) **EP 1 240 106 B1**
(45) Date of publication and mention of the grant of the patent: **01.09.2004**
(21) Application number: 00980206.7
(22) Date of filing: 29.11.2000
(51) Int. Cl.: C02F 1/04, B01D 1/00, B08B 3/08

(54) **A METHOD FOR CLEANING OBJECTS BY MEANS OF A HEATED LIQUID AND A PLANT FOR THE ACCOMPLISHMENT OF SAID METHOD**
VERFAHREN ZUR REINIGUNG VON OBJEKTEN DURCH EINE ERWÄRMTE FLÜSSIGKEIT UND ANLAGE ZUR DURCHFÜHRUNG DIESES VERFAHRENS
PROCEDE DE NETTOYAGE D'OBJETS AU MOYEN D'UN LIQUIDE CHAUFFE ET MATERIEL POUR LA MISE EN OEUVRE DE CE PROCEDE

(30) Priority: 30.11.1999 SE 9904325
(43) Date of publication of application: 18.09.2002
(73) Proprietor: Rubertsson, Agne, S-542 44 Mariestad (SE)
(72) Inventor: Rubertsson, Agne, S-542 44 Mariestad (SE)
(74) Representative: Mossmark, Anders
(86) International application number: PCT/SE2000/002362
(87) International publication number: WO 2001/040115

(56) References cited:
- DATABASE WPI Week 200007, Derwent Publications Ltd., London, GB; AN 2000-081319, XP002951449 & JP 11 330 106 A (HITACHI LTD ET AL.) 30 November 1999 & PATENT ABSTRACTS OF JAPAN & JP 11 330 106 A (HITACHI LTD ET AL.)
- DATABASE WPI Week 199723, Derwent Publications Ltd., London, GB; AN 1997-253406, XP002951450 & JP 9 085 007 A (JAPAN FIELD KK) 31 March 1997 & PATENT ABSTRACTS OF JAPAN & JP 09 085 007 A (JAPAN FIELD KK)
- DATABASE WPI Week 199418, Derwent Publications Ltd., London, GB; AN 1994-147157, XP002951451 & JP 6 091 251 A (KONICA CORP) 05 April 1994 & PATENT ABSTRACTS OF JAPAN & JP 06 091 251 A (KONICA CORP)
- DATABASE WPI Week 199247, Derwent Publications Ltd., London, GB; AN 1992-384776, XP002951452 & JP 4 281 890 A (FUJI FILM CO LTD) 07 October 1992 & PATENT ABSTRACTS OF JAPAN & JP 04 281 890 A (FUJI PHOTO FILM CO LTD)

## Description

### TECHNICAL FIELD

The present invention relates to a method for cleaning objects by means of heated fluid, and an apparatus for realising said method. More precisely, such deaning is referred to that occurs for example in connection with industrial production.

### STATE OF THE ART

In various connections, fluids are used within processes in a manner resulting in the contamination of said fluids. This occurs especially in processes for the cleaning of objects. As an example, the cleaning of industrial products in connection with manufacturing processes could be mentioned, whereby work pieces and products are deaned in baths, or by spraying with the fluid.

Processes for cleaning off dirt and petroleum products from vehicles, such as motor cars and railway cars, could also be mentioned.

In such cleaning processes there is a strong requirement for purification of the fluid in such a way as to make it contribute in the lowest possible degree to contamination of the environment. Thereby, the optimum would be if the fluid were purified so as to allow renewed use thereof in the process, whilst the collected contamination products, in the form of a substantially fluid-free mass, could be brought to destruction. In this way, the environment would be burdened as little as possible, whilst improving the process economy through not having to supply new fluid at any substantial rate. It is also important that the amount to be destroyed is as small as possible; it might even be possible that certain expensive substances would be removed before destruction, to be recycled.

For purification in the above-mentioned processes it is known to use such methods as filtration and flocculation. The achievable degree of purification is however limited. In processes where the fluid is purified to be recycled, it will be contaminated, during successive recycled use, to a higher and higher degree because of the imperfection of the purification process. If the incompletely purified fluid is conveyed to a recipient, said recipient will be burdened, and the burdening will be the more severe, the larger the volume of fluid carrying the contamination. In order to enable a more efficient purification than can be achieved by the methods described above, it is previously known, after an appropriate degree of initial purification, such as by filtration with removal of at least solid particles, to evaporate the residual fluid and to return it, after condensation, to the cleaning process. By means of the evaporation, such a high degree of separation is achievable that the remainder will mainly consist of the contaminants and can be separated for destruction.

However, the evaporation results in substantial energy consumption and might require separate cooling for the condensation. The use of heat pumps has thereby been suggested, in order to return the condensation heat to the evaporation process. This will however result in a complex plant and a certain amount of electric power will have to be supplied for the operation of the heat pump.

In certain connections, the power consumption for heating when evaporating fluids can be reduced through lowering the evaporation temperature by creating a vacuum, by means of a pumping device reducing the pressure above the surface of the fluid. As an example of pumping devices, fluid-powered ejectors could be mentioned.

From the patent publication JP-A-11 33 01 06 a purification apparatus is known, using evaporation of fluid that has been contaminated during the cleaning process. Hereby the fluid is pumped from a container in which cleaning of objects is performed, to an evaporation container equipped with heating devices. The pressure above the fluid surface in the evaporation container is delimited by condensing the vapour and pumping the condensate on further, to be returned to the cleaning process. For pumping of the condensed fluid an ejector is used, powered by a pump arranged solely for this purpose.

### DISCLOSURE OF INVENTION

The object of the present invention is to provide a method that decreases the power consumption of the described distillation process for the contaminated fluid, or that even enables a realisation of the distillation without supplying extraneous power above that necessary for heating and fluid transportation in the cleaning process. The process allows the apparatus for said cleaning to be made very simple, especially in comparison with cleariing plants comprising a heat pump and its appropriate ancillary equipment.

The object of the invention is achieved by pumping the fluid contaminated in the cleaning process in a flow that, after having passed a filtration device, is divided into two partial flows, a first partial flow conducted to an evaporation device and a second partial flow conducted to an ejector for powering thereof. The ejector is functioning to reduce the pressure inside the evaporation device and thereby to lower the temperature necessary for the evaporation. The ejector is also used for condensation and for returning the condensate to the cleaning process. By balancing the two partial flows in relation to each other, maximum power economy can be achieved, through the first partial flow being adapted so as not to be larger than necessary to maintain a predetermined degree of cleanliness of the cleaning fluid. The maximum possible portion of the total flow can hereby, in the form of the second partial flow, be utilised for operating the ejector and thereby obtaining the highest possible pressure reduction in the evaporation device, allowing the evaporation to take place at the lowest possible temperature. Thus, through this balancing of the partial flows in relation to each other, the power required for heating of the cleaning fluid and for pumping it around can simultaneously be used in the evaporation process, to reduce the heating requirement thereof.

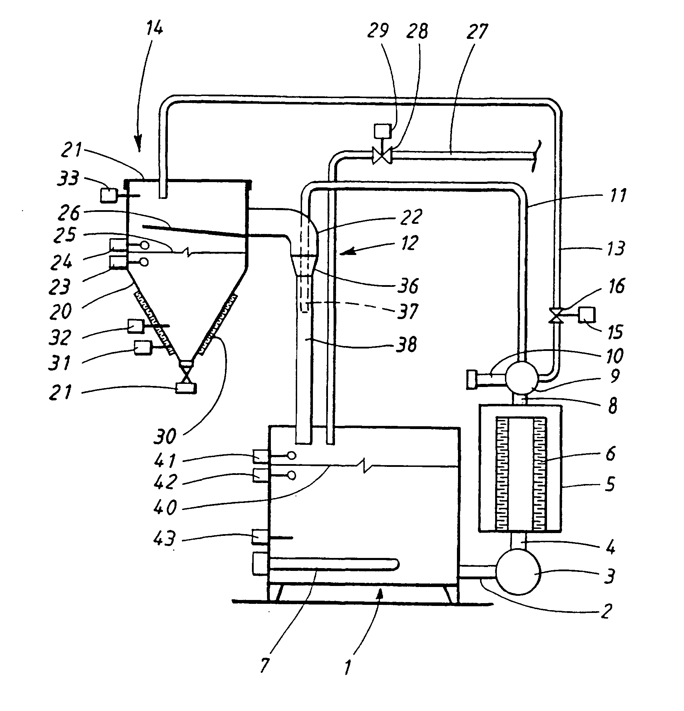

### DESCRIPTION OF THE DRAWING

In the following, an embodiment of the invention will be described, with reference to the enclosed drawing, illustrating a block diagram of the apparatus for realising the method.

### DESCRIPTION OF THE PREFERRED EMBODIMENT

The drawing illustrates an apparatus for the cleaning of work pieces and products of an industrial production. The cleaning of said objects is performed by means of a fluid, and to accommodate this fluid a reservoir 1 is provided. The cleaning may thereby take place within the reservoir through the objects being treated for example mechanically or by means of fluid from jet orifices, or by means of ultrasonic vibrations. Alternatively, the reservoir 1 may be used as a storage tank, from which fluid is taken for e.g. flushing of the objects. However, no flushing equipment or other ancillary equipment is shown in the figure. Generally, it is presupposed that the cleaning fluid is heated, which is indicated by an electrically powered heating coil 7 inside the reservoir 1.

As the cleaning process progresses, the fluid inside the reservoir will become contaminated by particles and material freed from the cleaned objects during the cleaning. The contaminants may for example be machining residues such as material chips, or residues from e.g. cutting fluid or lubricating agents. The contaminated fluid in the reservoir is removed through a drainpipe 2 by means of a pump 3. From the pump 3, the fluid is transported on through a pipe 4 into a filter container 5, provided with at least a coarse filter for particle separation and possibly a fine filter. Hereby, the fluid flows from the pipe 4, out through the tubular filter bodies and into the container 5, and on through an outlet pipe 8 away from there.

The outlet pipe 8 is connected to a three-way valve 9 with two outlets: a flushing pipe 10 that can be used for the removal of fluid for other purposes outside the reservoir 1, and a circulation pipe 11 leading to an ejector 12. Furthermore, a filling pipe 13, leading to an evaporation vessel 14, is connected to the outlet pipe 8. A control unit 15 is functioning to distribute, by means of a valve 16, the fluid coming from the outlet pipe 8, between the pipes 10, 11, 13 connected to the valve 9. It should however be noted that the three-way valve 9 could be replaced with control valves in the pipes 10 and 11, respectively. These pipes could then be provided with control units for said valves. The filling pipe 13 may be provided with a restrictor valve 16 with a control unit 15. The division of the fluid into partial flows between the pipes 11 and 13 can thus be controlled by means of the valve 16. If it is opened, only part of the flow will flow through the pipe 13, due to the pressure built up in front of the restrictor valve 16. It should also be mentioned that the pump 3, driving the flow, could be provided with a capacity control, such that the total fluid flow into the three pipes 10, 11 and 13 will not only be determined by the opening positions of the valves but also by the total flow coming from the pump. Such a capacity control, as an alternative to restricting or shutting off flows, is frequently advantageous when considering the power consumption of the pump drive.

The evaporation vessel 14 consists of a container 20, here illustrated with a conical bottom, at the narrower bottom portion of which a drain valve 21 is provided for concentrated contaminants. The container 20 is closed by a cover 21 and has, at its top end, an outlet in the form of a large diameter pipe 22. Inside the container there is a non-closed partition wall, called a thermal cover 26, sloping down towards the mouth of the pipe 22 in the container. Two level gauges 23 and 24 define the variation range for the surface level 25 of the fluid in the lower portion of the container. Around the lower portion of the container 20 a heating unit 30 is provided, here shown as an electrical heating jacket, with a control unit 31 for its operation. Another alternative would be a heating loop inside the container. Further, a temperature sensor 32 is provided in the lower portion of the container, for registering the fluid temperature, and a pressure sensor 33 for registering the pressure in the vapour space above the fluid level 25.

The outlet pipe 22 from the top end of the container 20 continues, after a bend, into a conically narrowing portion 36, through which the circulation pipe 11 extends with a portion 37 defining a clearance between the exterior wall thereof and the interior wall. An end pipe 38 is connected to the smaller end of the portion 36. The pipe 38 mouths inside the tank 1, above or below its fluid surface 40. This fluid surface is defined by two level gauges 41 and 42. Furthermore, a temperature sensor 43 is connected to the tank, below its fluid surface, for controlling the momentary power to the heating coil 7.

There is a further pipe 27 for supplying fresh fluid from a container or, if the fluid is water, for example from a water supply system. A valve 28 with a control unit 29 is arranged to control the inflow of fresh fluid. The pipe 27 is shown to mouth inside the reservoir 1. Should the supplied fluid require high-degree purification, it could however be supplied via the evaporation vessel 14.

As can be gathered, the previously mentioned ejector 12 is defined by the portion of the pipe 22 after its bend, the narrowing portion 36, the pipe 38 connected to the smaller end of said portion, and the inner pipe 11, extending partially through these elements and being terminated at a suitable distance downstream of the smaller end of the portion 36, inside the pipe 38. This ejector or jet pump will create, with fluid flowing through the pipe 11 and out through its orifice portion 37, a gas flow out of the container 20 via the pipe 22, thus creating a vacuum inside the container.

In operation of the plant, fluid is pumped by means of the pump 3 through the filter container 5 and to the tree-way valve 9. Through controlling the valve 16 from the control unit 15, an appropriate partial flow is diverted, through the pipe 13, from the restricted flow in the pipe 11 and up to the evaporation vessel 14. This partial flow is so adapted, in relation to the degree of contamination that the fluid inside the reservoir 1 is successively being subjected to, that such a dilution of the fluid in the reservoir 1 is obtained, through the returning of the fluid purified through distillation, that the concentration of contaminants is kept at an acceptable level. Hereby, a requirement exists regarding how contaminated the fluid in the reservoir used for the cleaning is allowed to be. A certain amount of contamination will flow past the filters and be successively added during the circulation through the reservoir. In order for this not to lead to an excessive contamination of the fluid, compared to what is allowed, the fluid will have to be successively diluted with the fluid purified to a still higher degree, in order for an equilibrium level at a maximum allowed degree of contamination to be maintained. The required amount per unit of time of such specially purified fluid that needs to be supplied corresponds to the partial flow to be diverted to the evaporation vessel 14 via the pipe 13.

The flow supplied to the evaporation vessel 14 could be controlled by adjusting a continuous partial flow, adapted to the requirement of purified dilution fluid. Alternatively, the partial flow could be controlled by allowing the valve 16 to work intermittently, such that the evaporation vessel is topped up from each time the level gauge 23 indicates that the fluid surface has dropped to its lowest predetermined level, until the level gauge 24 indicates that the fluid surface has reached its highest predetermined level. This intermittent control would be preferred and will be used in the following function description.

The determination of how large an amount that needs to be evaporated during operation of the plant can be performed according to various principles. In many cases it should be possible to adjust the flow manually on the basis of experience of the contamination caused by a certain cleaning cycle. It is also conceivable to control the flow rate automatically, either by how high the load is on the plant with regard to the amount of goods per unit of time, or through measuring the degree of contamination, for example by measuring the transparency of the fluid, which will decrease with an increasing degree of contamination. In other words, if the fluid tends to be so contaminated as not to fulfil the requirement, the partial flow through the pipe 13 must be increased, and by a decreasing degree of contamination, e.g. during periods when no cleaning is performed, the partial flow can be reduced. The amount to be evaporated must of course be adapted to the requirement and to the supply of fluid. The evaporation capacity is depending on such factors as the heat supplied to the container 20, the vacuum created by the ejector 12 and the size of the fluid surface, and on if one or more evaporation vessels are provided.

The supply of fluid through the pipe 13 to the container 20 will raise the fluid level 25, and when it has reached a predetermined maximum level, the level gauge 24 will register this. In order not to exceed the maximum level, the valve 16 will be closed. Fluid will now be evaporated successively. Hereby, the fluid inside the container must be maintained at a certain temperature through heating. How high this temperature must be in order to achieve substantial evaporation is determined by the boiling point of the fluid, which, for a specific fluid, is dependent of the pressure above the fluid surface; the lower the pressure, the lower the boiling point. In order to obtain a temperature that is optimally adapted to the required temperature of the cleaning fluid, thus saving on heating power, a vacuum will be created inside the vessel by supplying fluid through the pipe 11 to the ejector 12. The fluid flowing out through the orifice portion 37 will cause a gas flow out of the evaporation vessel and create a vacuum above the fluid surface 25. If the vacuum that can be created by means of the ejector, at the flow that can be conducted therethrough, will not be sufficient to maintain a maximum allowed fluid level in the container 20 at the prevailing ambient temperature, heat has to be supplied to the container. This can be made by means of the heating unit 30. If, on the other hand, the evaporation is too high, causing the level gauge 23 to register a level dropping below the predetermined lowest fluid level, the heating can be reduced.

The evaporated fluid that has received a high degree of purification through the evaporation will be collected in the space above the fluid level 25 and will, at least partially, condense there. The condensate and the remaining vapour will be sucked along through the pipe 22 through the action of the ejector 12 and upon further condensation reach the reservoir 1 through the pipe 38, together with the fluid flowing through the ejector, which was supplied through the pipe 11. To the reservoir will thus be conducted on the one hand, fluid that has only been purified in the filters and flows to the reservoir from the pipe 11 via the orifice portion 37, or through the pipe 10 under control of the valve 9, or partial flows from both said pipes. On the other, the reservoir will further be supplied with highly purified fluid generated in the evaporation vessel 14 and fed to the reservoir by means of the ejector 12. Through this, a state of equilibrium between filtered fluid, and fluid highly purified through distillation, can be maintained in the reservoir, enabling the maximum allowed degree of contamination not to be exceeded.

If an intermittent control of the partial flow to the evaporation vessel is utilised, the flow will be shut off by means of the valve 16, as discussed above. When, through the evaporation, the fluid level has dropped to the lowest predetermined level, registered by the level gauge 23, the process will be started all over again by opening the valve 16 until the highest predetermined fluid level is reached. The control procedure will thus be that the valve 16 will be opened when the level gauge 23 registers the lowest level and will be closed when the level gauge 24 registers the highest level, and will remain closed until the level gauge 23 activates an opening of said valve again.

If it is preferred to operate the plant with a continuous flow to the evaporation vessel, primarily the amount of fluid supplied per unit of time and the amount of evaporated fluid possible per the same unit of time must be adapted to each other. If the evaporation capacity is too small at an uninterrupted flow, the vessel will be overfilled. If, however, the evaporation capacity is sufficient to evaporate the regulated amount of supplied fluid, the evaporation capacity can, if necessary, that is, if a tendency towards overfilling is registered by the level gauge 24, be increased through increasing the heat supply and/or through reducing the vacuum.

The requirement for evaporation of the fluid in the evaporation vessel is that the pressure above the fluid surface is such that the fluid is at the boiling point at the temperature prevailing in the fluid. The relationship hereby is that the lower the pressure obtained by means of the ejector 12 is, the lower is the temperature at which evaporation occurs. The capacity of the ejector, regarding reduction of the pressure, depends on its design and on the amount of fluid per unit of time pumped through it. An increased pressure reduction capacity through design can be achieved not only through dimensioning but also by arranging several ejectors in series or in parallel. The amount of fluid flow through the ejector is dependent of the capacity of the pump 3; as mentioned, the pump may be equipped for capacity control. Generally, however, there will be a limit to how high a flow through the reservoir 1 that it is suitable to maintain, with regard to such factors as e.g. the cleaning effect. The relationship between pressure and temperature will of course also be highly dependent of the volatility of the fluid. In the present case, water is primarily assumed as the fluid, preferably complemented with surface-active detergents.

If, considering these factors, the ejector device has been given a design adapted to the conditions and thus a certain capacity for lowering the pressure, it may occur that the ambient temperature, probably most commonly room temperature, will not be sufficient to reach the boiling point at the vacuum that can be created. Furthermore, the heat of evaporation is taken from the fluid, tending to lower the temperature thereof. It is therefore generally necessary to supply further heat to the fluid, and for this the above-mentioned heating jacket 30 has been provided. The temperature of the fluid can hereby be monitored by means of the temperature sensor 32. The temperature that has to be maintained in order to perform evaporation is determined, as mentioned, by the pressure in the container, which can be registered by means of the pressure sensor 33. Whether any evaporation has to take place at all is determined by the fluid level in the container 20, monitored by the level gauges 23 and 24. If the level gauge 24 indicates a level above the predetermined maximum level, evaporation shall be maintained, as described, until the lowest level, registered by means of the level gauge 23, has been reached. For reasons of power economy, pressure decrease as a means of evaporation should be given priority and heating should come second if, at the obtainable vacuum, evaporation does not occur. Through an adapted control system, optimum power conditions can be maintained, based on the readings from said sensors; the temperature sensor 32, the level gauges 23, 24 and the pressure sensor 33.

The heat of evaporation taken from the fluid inside the evaporation vessel will be regained when the vapour condenses. It may be assumed that condensate is generated to a certain extent already in the vapour space of the container, above the fluid surface 25, thereby falling out on the partition wall 26 and flowing out through the pipe 22. Final condensation occurs in the ejector and in the pipe 38, and the heat is delivered to the fluid in the reservoir 1, where the condensate will eventually end up. It is frequently required that the fluid in the reservoir 1 should have an elevated temperature, in order to obtain the best cleaning effect. Hereby, major opportunities are available for adaptation of the plant in such a manner that the heat necessary for the evaporation can be returned to the process, to give the cleaning fluid an increased temperature.

In such cleaning plants for which the invention is especially applicable, the cleaning fluid is generally kept heated, by water solutions often to more than 50°C but below the boiling point. In order to maintain this temperature above the ambient, a supply of heat is required. To this end the heating coil 7 in the reservoir 1 has been provided. As heat is supplied to the fluid by the evaporating process through the evaporation condensate, the heating power for heating the fluid in the reservoir 1 can be reduced, thereby compensating for the major portion of the heating requirement for keeping the evaporation process going. This allows for such a balance that the supplied energy for heating generally does not have to be increased when evaporation takes place; it only has to be redistributed between the heating elements 7 and 30 of the described embodiment. At the same time, the evaporation temperature will be lowered through utilising the fluid circulation for creating a vacuum in the evaporation vessel.

The rest of the energy supplied to the evaporation process, that is the energy for creating a vacuum by means of the ejector 12, is supplied through the work of the pump 3. In a plant of this kind it is however normally necessary to have a certain circulation of the cleaning fluid and if, as in the embodiment example, there is a filtration device, this has to be passed by the cleaning fluid. With an optimum adaptation of the plant, it is conceivable that no extra energy needs to be supplied to the pump 3 for operating the ejector, over and above the energy that has to be supplied anyway for circulating the fluid.

The conclusion will thus be that, at least under certain conditions, it will be possible to operate the plant, with its high-degree cleaning of partial amounts through evaporation, without any, or with a very limited, addition of energy above that necessary for maintaining the circulation and temperature required for the cleaning function.

In time with the evaporation, the fluid in the container 20 will be enriched with nonvolatile substances that will not evaporate. As mentioned, those can be drained through the valve 21 for final destruction. This entails that the total amount of fluid in the system will be decreased. Such a decrease will incidentally also occur through vaporisation to the ambient atmosphere and, in most cleaning processes, also through fluid following the cleaned objects. This reduction of the fluid volume is compensated by supplying fresh fluid, and for this a pipe such as the pipe 27 may be provided. Preferably, the supply is arranged in connection with drainage of the contaminants through the valve 21. If the procedure is to be automated, this is possible by co-ordination of the registered data from the level gauges 23, 24 and 41, 42. In connection with removal of fluid and collected contamination, completion of substances such as detergents might be required. Also cleaning of filters, if provided, is part of the maintenance.

In order to achieve the described function, a certain control sequence will be required for the comprised operating units. This may be exemplified in the following manner:
1. The partial amount per unit of time that has to be supplied from the flow circulated by means of the pump 3 to the evaporation vessel, is determined and adjusted by intermittent or continuous flow on the basis of the necessary dilution with fluid from the high-degree purification through evaporation during the prevailing conditions.
2. By means of the level gauges 23, 24, it is monitored that an evaporation of fluid occurs that corresponds to the partial amount supplied.
3. Should the fluid level within the evaporation vessel tend to rise in spite of maximum flow through the ejector device, the evaporation vessel must be heated. As discussed, if there are other needs for heating of the fluid, such heating can then be reduced, so as to balance the power requirement for heating the fluid against the added contribution for evaporation.
4. If, through simultaneous maintaining, by means of the ejector device, of maximum vacuum in the evaporation vessel, and heating, such evaporation is achieved that the fluid level is registered as falling below the predetermined minimum, with intermittent control, fresh fluid can be supplied. By continuous supply, without control of the fluid flow, the heating can be reduced and, if so required, the vacuum can subsequently be reduced through a reduced partial amount supplied to the ejector device.
5. If, in spite of maintaining maximum vacuum and maximum heating, the amount of fluid within the evaporation vessel should tend to rise above the predetermined maximum level, the partial amount of fluid supplied to the evaporation vessel has to be reduced.

Within the scope of the invention, as defined by the appended claims, the method and the apparatus may be varied in relation to the description of the preferred embodiment example. In said example it has been presumed that before the fluid is supplied to the evaporation vessel it has to pass through certain purification; the example states filtering/particle separation. The requirement for initial purification depends of the nature and amount of contamination in the fluid, and on the degree of cleanliness to be maintained therein. Piping and valve arrangements may be designed differently than the way described, assuming that they are adapted for distributing pumped flow between the evaporation vessel and the ejector. Having stated electrical current for heating does not exclude the use of other heating methods. For example, the heated fluid in the storage container could be used for heating the evaporation vessel by means of a heat exchanger, with or without complementary heating. Through the vacuum created in the evaporation vessel by the ejector, the evaporation temperature could be lowered to below that inside the storage container.

The reservoir 1, also called the storage container, may be designed like a tub in which the objects to be cleaned are submerged. It may also function as a buffer container for flushing fluid. The container may be subdivided into several containers and/or tubs and is referred to in the claims as a container system.

As an example of such a system, cleaning plants could be mentioned that have several containers or tubs between which the cleaning fluid is pumped. Hereby, the containers are arranged so that a first container is functioning to receive condensate from the ejector and to transfer fluid to a second container. From this container fluid in an appropriate amount will be transferred to the evaporation vessel. The first container, to which the condensate is supplied, thus contains the purest fluid in the system, whereas the second container contains more contaminated fluid. It is thus suitable for use during preparatory cleaning, followed by a subsequent cleaning in the first container. Such a multi-stage plant can be extended with further, intermediate containers, consecutively receiving fluid from the preceding container in the chain and sending it on to the following one, with the previously mentioned container transferring fluid to the evaporation vessel being the last in the line. The cleaned object should hereby pass from the last-mentioned container and the one for the final cleaning to the previously mentioned first container. Alternatively, the containers could of course be used for different objects having differing cleanliness requirements.

It should also be mentioned that a certain separation of contaminants, besides that created by the evaporation, could be performed in the evaporation vessel. If, for example, any surface layer of oil is skimmed off, the evaporation will be facilitated.

## Claims

1. A method for cleaning objects by means of heated fluid, said fluid thereby being contaminated and received in a container system (1), whereby the contaminated fluid is successively pumped from the container system to an evaporation device (14) and is subjected to evaporation and subsequent collection of the hereby created condensate, which is then returned to the cleaning process performed by means of said heated fluid, said evaporation being performed at a pressure maintained below atmospheric pressure by means of an ejector device (12),
**characterised in that** the fluid from the container system (1) in an as such known manner is pumped in a flow through a filtration device (5, 6) for separation of particle contaminants, whereupon the fluid, after having passed the filtration device, is subdivided into two partial flows, of which a first one is transported to the evaporation device (14), whilst the second partial flow is conducted through said ejector device (12) for the operation thereof, said ejector device being connected on its suction side (22) to the evaporation device for creating said vacuum, and connected on its discharge side (38) for returning the second partial flow of the fluid to the cleaning process, together with the condensate from the evaporation device.

2. The method according to claim 1, **characterised in that** the operation of the ejector device (12) is so adapted, by means of an adaptation of the partial flow therethrough, with regard to the vacuum thus obtained within the evaporation device (14), that the boiling point during evaporation of the fluid substantially corresponds to the elevated temperature at which the fluid is maintained for use in the cleaning process.

3. The method according to claim 1, **characterised in that** the degree of purity of the fluid supplied to the cleaning process is measured and related to a certain, predetermined degree of cleanliness and that the evaporation result is successively adapted to the need for dilution of the fluid in the container system (1) with the condensate, in order to maintain the predetermined degree of cleanliness, said result adaptation being performed through control of the power supply for heating in the evaporation device (14) in relation to the adaptation of the ability of the ejector device (12) to maintain a vacuum at which evaporation occurs, at the temperature prevailing in the evaporation device (14).

4. An apparatus for cleaning objects by means of the method according to any one of the preceding claims 1-3, **characterised in that** it comprises a container system (1) for accommodating said fluid, a device (3) for pumping the fluid from the container system and through a filtration device (5, 6) for separation of contamination particles, an evaporation device (14) for creating of condensate and for separation, through evaporation, of enriched, further contaminants, an ejector device (12), connected on its suction side (22) to the evaporation device (14) for absorbing vapour and condensate therefrom, and connected on its discharge side (38) to the container system (1) for returning the condensed fluid to the cleaning process, a valve device (9) being provided downstream of the filtration device (5, 6) for dividing the fluid flow into two partial flows, of which the first partial flow is conducted to the evaporation device (14), whilst the second partial flow is conducted to the ejector device (12), the valve device (9) being controllable so that the proportions between the two partial flows can be adapted in such a manner that the partial flow conducted to the evaporation device can be adapted to consist of just the amount necessary for attaining a predetermined degree of cleanliness in the cleaning process through dilution with the condensate, thereby allowing the second, remaining partial flow to be almost entirely used, through the ability of the ejector (12) to decrease the pressure within the evaporation device (14), for reducing the evaporation temperature, thereby reducing the energy required for the evaporation.

5. The apparatus according to claim 4, **characterised in that** the degree of cleanliness of the fluid in the container system (1) is monitored for controlling the balance between the partial flows, with an increase of the partial flow to the evaporation device (14) when the cleanliness degree falls below a predetermined value through contamination of the fluid, so as to activate an increase in the supply of condensate to the container system,

6. An apparatus according to claims 4 or 5, **characterised in that** the evaporation device (14) is provided with level gauges (23, 24) for registering a predetermined, minimum fluid level and a predetermined maximum fluid level and **in that**, for controlling the supply of said first partial amount of fluid to the evaporation device from the container system (1), means (15, 16) are provided, functioning to be activated by the level gauges in such a way that the supply of fluid to the evaporation device is activated when the minimum fluid level is registered, whereas, when the maximum level is registered, the fluid supply is interrupted until the minimum level is registered anew after having performed evaporation.

7. An apparatus according to any one of the claims 4, 5 or 6,
**characterised in that** the container system (1) comprises heating means (7) for the fluid and that the evaporation device (14) comprises means (30) for heating the fluid to achieve evaporation, said heating means (7, 30) being provided with control means functioning to reduce the power supply to the container system heating means (7) when the evaporation device heating means (30) is activated through supplying power, said reduction being at least mainly compensated by the heat supplied by the condensate from the evaporation.

## Patentansprüche

1. Verfahren zum Reinigen von Objekten mittels einer erwärmten Flüssigkeit, wobei die Flüssigkeit dabei in einem Behältersystem (1) kontaminiert und aufgenommen wird, wobei die kontaminierte Flüssigkeit schrittweise von-dem-Behältersystem-zu-einer Verdampfungseinrichtung (14) gepumpt wird und einer Verdampfung und anschließend einer Sammlung des dadurch erzeugten Kondensats ausgesetzt wird, welches danach zu der mittels der erwärmten Flüssigkeit durchgeführten Reinigungsprozess zurückgeführt wird, wobei das Verdampfen bei einem Druck durchgeführt wird, der mittels einer Ausstoßeinrichtung (12) unterhalb des atmosphärischen Drucks gehalten wird,
**dadurch gekennzeichnet,**
**daß** die Flüssigkeit von dem Behältersystem (1) auf bekannte Art und Weise in einem Fluß durch eine Filtrationseinrichtung (5, 6) für eine Abtrennung von Schmutzteilchen gepumpt wird, woraufhin die Flüssigkeit, nachdem sie die Filtrationseinrichtung passiert hat, in zwei Teilflüsse aufgeteilt wird, von welchen ein erster zu der Verdampfungseinrichtung (14) transportiert wird, während der zweite Teilfluß durch die Ausstoßeinrichtung (12) für den Betrieb derselben geführt wird, wobei die Ausstoßeinrichtung an ihrer Saugseite (22) mit der Verdampfungseinrichtung zum Bilden des Vakuums verbunden und an ihrer Auslaßseite (38) mit dem Behältersystem (1) zum Zurückführen des zweiten Teilflusses der Flüssigkeit zu dem Reinigungsprozeß zusammen mit dem Kondensat aus der Verdampfungseinrichtung verbunden wird.

2. Verfahren nach Anspruch 1, **dadurch gekennzeichnet, daß** der Betrieb der Ausstoßeinrichtung (12) mittels einer Anpassung des Teilflusses durch dieselbe bezüglich des somit innerhalb der Verdampfungseinrichtung (14) erhaltenen Vakuums derart ausgebildet wird, daß der Siedepunkt der Flüssigkeit während der Verdampfung im wesentlichen der hohen Temperatur entspricht, auf welcher die Flüssigkeit für eine Verwendung in dem Reinigungsprozeß gehalten wird.

3. Verfahren nach Anspruch 1, **dadurch gekennzeichnet, daß** der Reinheitsgrad der an den Reinigungsprozeß gelieferten Flüssigkeit gemessen und auf ein festes, vorbestimmtes Sauberkeitsniveau bezogen wird, und daß das Verdampfungsergebnis schrittweise an das Erfordernis für eine Verdünnung der Flüssigkeit in dem Behältersystem (1) mit dem Kondensat angepaßt wird, um das vorbestimmte Sauberkeitsniveau aufrecht zu erhalten, wobei die Ergebnisanpassung durch Steuerung der Stromzufuhr für eine Erwärmung in der Verdampfungseinrichtung (14) durchgeführt wird im Verhältnis zu der Anpassung der Fähigkeit der Ausstoßeinrichtung (12) ein Vakuum, bei welchem eine Verdampfung auftritt, auf der in der Verdampfungseinrichtung (14) vorherrschenden Temperatur zu halten.

4. Anlage zum Reinigen von Objekten mittels eines Verfahrens gemäß einem der vorhergehenden Ansprüche 1 bis 3,
**dadurch gekennzeichnet,**
**daß** die Anlage ein Behältersystem (1) zum Aufnehmen der Flüssigkeit, eine Einrichtung (3) zum Pumpen der Flüssigkeit aus dem Behältersystem und durch eine Filtrationseinrichtung (5, 6) heraus zum Separieren von Schmutzteilchen, eine Verdampfungseinrichtung (14) zum Bilden eines Kondensats und zum Abtrennen von angereicherten, weiteren Schmutzteilchen durch Verdampfung, eine Ausstoßeinrichtung (12), welche mit ihrer Saugseite (22) mit der Verdampfungseinrichtung (14) zum Absorbieren von Dampf und des Kondensats daraus verbunden ist und welche mit ihrer Auslaßseite (38) mit dem Behältersystem (1) zum Zurückführen der kondensierten Flüssigkeit zu dem Reinigungsprozeß verbunden ist, eine Ventileinrichtung (9), welche in Richtung stromabwärts der Filtrationseinrichtung (5, 6) zum Aufteilen des Flüssigkeitsflusses in zwei Teilflüsse vorgesehen ist, von welchen der erste Teilfluß zu der Verdampfungseinrichtung (14) geführt wird, während der zweite Teilfluß zu der Ausstoßeinrichtung (12) geführt wird, aufweist, wobei die Ventileinrichtung (9) derart steuerbar ist, daß die Verhältnisse zwischen den beiden Teilflüssen auf eine derartige Weise angepaßt werden können, daß der zu der Verdampfungseinrichtung geführte Teilfluß zum Bestehen aus lediglich der notwendigen Menge für ein Erreichen eines vorbestimmten Sauberkeitsniveaus in dem Reinigungsprozeß durch Verdünnung mit dem Kondensat angepaßt werden kann, wodurch eine nahezu vollständige Verwendung des zweiten, verbleibenden Teilflusses gewährleistet wird, durch die Fähigkeit der Ausstoßeinrichtung (12), den Druck innerhalb der Verdampfungseinrichtung (14) zum Verringern der Verdampfungstemperatur zu verringern, wodurch die für die Verdampfung erforderliche Energie reduziert wird.

5. Anlage nach Anspruch 4, **dadurch gekennzeichnet, daß** das Sauberkeitsniveau der Flüssigkeit in dem Behältersystem (1) zum Steuern des Gleichgewichts zwischen den Teilflüssen aufgezeichnet wird, mit einem Anstieg des Teilflusses zu der Verdampfungseinrichtung (14), wenn das Sauberkeitsniveau unter einen vorbestimmten Wert durch Kontamination der Flüssigkeit fällt, um somit eine Erhöhung der Zufuhr des Kondensats zu dem Behältersystem zu aktivieren.

6. Anlage nach Anspruch 4 oder 5, **dadurch gekennzeichnet, daß** die Verdampfungseinrichtung (14) mit Niveaumeßgeräten (23, 24) zum Registrieren eines vorbestimmten, minimalen Flüssigkeitsniveaus und eines vorbestimmten, maximalen Flüssigkeitsniveaus ausgestattet ist, und daß Mittel (15, 16) zum Steuern der Zufuhr der ersten Teilmenge der Flüssigkeit zu der Verdampfungseinrichtung von dem Behältersystem (1) vorgesehen sind, welche die Funktion aufweisen, durch die Niveaumeßgeräte in einer derartigen Weise aktiviert zu werden, daß die Zufuhr der Flüssigkeit zu der Verdampfungseinrichtung aktiviert wird, wenn das minimale Flüssigkeitsniveau registriert wird, wohingegen die Flüssigkeitszufuhr unterbrochen wird, wenn das maximale Niveau registriert wird, bis das minimale Niveau von neuem registriert wird, nachdem die Verdampfung durchgeführt worden ist.

7. Anlage nach wenigstens einem der Ansprüche 4, 5 oder 6, **dadurch gekennzeichnet, daß** das Behältersystem (1) Erwärmungsmittel (7) für die Flüssigkeit aufweist, und daß die Verdampfungseinrichtung (14) Mittel (30) zum Erwärmen der Flüssigkeit zum Gewährleisten der Verdampfung aufweist, wobei die Erwärmungsmittel (7, 30) mit Steuermitteln ausgestattet sind, welche die Funktion besitzen, die Stromzufuhr zu den Erwärmungsmitteln (7) des Behältersystems zu reduzieren, wenn die Erwärmungsmittel (30) der Verdampfungseinrichtung durch die Stromzufuhr aktiviert sind, wobei die Verringerung wenigstens im wesentlichen durch die Wärme kompensiert wird, welche durch das Kondensat aus der Verdampfung geliefert wird.

## Revendications

1. Procédé pour nettoyer des objets au moyen d'un fluide chauffé, ledit fluide étant contaminé de cette façon et reçu dans un système de conteneur (1), de sorte que le fluide contaminé est pompé successivement à partir du système de conteneur vers un dispositif d'évaporation (14) et est soumis à évaporation et recueil subséquent des condensats ainsi créés, qui est ensuite renvoyé au processus de nettoyage mis en oeuvre au moyen dudit fluide chauffé, ladite évaporation étant mise en oeuvre sous une pression maintenue en dessous de la pression atmosphérique au moyen d'un dispositif d'éjection (12), **caractérisé en ce que** le fluide à partir du système de conteneur (1) d'une manière connue en soi est pompé en un flux à travers un dispositif de filtration (5, 6) pour séparer des contaminants en particule, après quoi le fluide, après avoir passé le dispositif de filtration, est subdivisé en deux flux partiels, parmi lesquels un premier est transporté vers le dispositif d'évaporation (14), tandis que le deuxième flux partiel est conduit à travers ledit dispositif d'éjection (12) pour son fonctionnement, ledit dispositif d'éjection étant relié sur son côté d'aspiration (22) au dispositif d'évaporation afin de créer ledit vide, et relié sur son côté de vidage (38) pour renvoyer le deuxième flux partiel du fluide vers le processus de nettoyage, conjointement avec le condensat à partir du dispositif d'évaporation.

2. Procédé selon la revendication 1, **caractérisé en ce que** le fonctionnement du dispositif d'éjection (12) est adapté, au moyen d'une adaptation du flux partiel le traversant, par rapport au vide ainsi obtenu à l'intérieur du dispositif d'évaporation (14), de sorte que le point d'ébullition pendant l'évaporation du fluide correspond sensiblement à la température élevée à laquelle le fluide est maintenu pour être utilisé dans le processus de nettoyage.

3. Procédé selon la revendication 1, **caractérisé en ce que** le degré de pureté du fluide amené vers le processus de nettoyage est mesuré et découle d'un véritable degré de propreté prédéterminé, et **en ce que** le résultat d'évaporation est adapté successivement à la nécessité de diluer le fluide dans le système de conteneur (1) avec le condensat, dans le but de maintenir le degré prédéterminé de propreté, ladite adaptation de résultat étant mis en oeuvre par commande dans le dispositif d'évaporation (14) de l'alimentation en énergie de chauffage, découlant de l'adaptation de la capacité du dispositif d'éjection (12) pour maintenir un vide sous lequel se fait l'évaporation, à la température établie dans le dispositif d'évaporation (14).

4. Dispositif pour nettoyer des objets grâce au procédé selon l'une quelconque des revendications précédentes 1 à 3, **caractérisé en ce qu'**il comprend un système de conteneur (1) pour maintenir ledit fluide, un dispositif (3) pour pomper le fluide à partir du système de conteneur et à travers un dispositif de filtration (5, 6) pour séparer des particules de contamination, un dispositif d'évaporation (14) pour créer un condensat et pour séparer, par évaporation, de contaminants ultérieurs enrichis, un dispositif d'éjection (12), connecté sur son côté d'aspiration (22) au dispositif d'évaporation (14) pour y absorber vapeur et condensat, et relié sur son côté de vidage (38) au système de conteneur (1) pour renvoyer le fluide condensé au processus de nettoyage, un dispositif formant valve (9) étant constitué en aval du dispositif de filtration (5, 6) pour diviser le flux de fluide en deux flux partiels, parmi lesquels le premier flux partiel est conduit vers le dispositif d'évaporation (14), tandis que le deuxième flux partiel est conduit vers le dispositif d'éjection (12), le dispositif formant valve (9) pouvant être commandé de sorte que les proportions entre les deux flux partiels peuvent être adaptées d'une telle manière que le flux partiel conduit vers le dispositif d'évaporation peut être adapté afin de comporter la quantité juste nécessaire pour atteindre un degré prédéterminé de propreté dans le processus de nettoyage par dilution avec le condensat, de façon à permettre au second flux partiel restant d'être pratiquement entièrement utilisé, par la capacité de l'éjecteur (12) de diminuer la pression à l'intérieur du dispositif d'évaporation (14), pour réduire la température d'évaporation, de façon à réduire l'énergie nécessaire pour l'évaporation.

5. Dispositif selon la revendication 4, **caractérisé en ce que** le degré de propreté du fluide dans le système de conteneur (1) est surveillé pour commander l'équilibre entre les flux partiels, avec une augmentation du flux partiel vers le dispositif d'évaporation (14) lorsque le degré de propreté tombe en dessous d'une valeur prédéterminée par contamination du fluide, de façon à activer une augmentation de l'alimentation du condensat vers le système de conteneur.

6. Dispositif selon la revendication 4 ou 5, **caractérisé en ce que** le dispositif d'évaporation (14) est constitué avec des indicateurs de niveau (23, 24), pour enregistrer un niveau de fluide minimum prédéterminé et un niveau de fluide maximum prédéterminé et **en ce que**, pour commander l'alimentation de ladite première quantité partielle de fluide vers le dispositif d'évaporation à partir du système de conteneur (1), des moyens (15, 16) sont constitués, fonctionnant afin d'être activés par les indicateurs de niveau d'une telle manière que l'alimentation en fluide vers le dispositif d'évaporation est activée lorsque le niveau de fluide minimum est enregistré, alors que, lorsque le niveau maximum est enregistré, l'alimentation en fluide est interrompue jusqu'à ce que le niveau minimum soit de nouveau enregistré après avoir mis en oeuvre une évaporation.

7. Dispositif selon l'une quelconque des revendications 4, 5 ou 6, **caractérisé en ce que** le système de conteneur (1) comprend des moyens de chauffage (7) pour le fluide et **en ce que** le dispositif d'évaporation (14) comprend des moyens (30) pour chauffer le fluide afin de réaliser une évaporation, lesdits moyens de chauffage (7, 30) étant constitués avec des moyens de commande fonctionnant afin de réduire l'alimentation en énergie des moyens de chauffage du système de conteneur (7) lorsque les moyens de chauffage du dispositif d'évaporation (30) sont activés par alimentation en puissance, ladite réduction étant au moins principalement compensée par la chaleur alimentée par le condensat à partir de l'évaporation.
